# EUROPEAN PATENT APPLICATION

(11) **EP 1 378 221 A1**
(43) Date of publication of application: **07.01.2004**
(21) Application number: 03006667.4
(22) Date of filing: 25.03.2003
(51) Int. Cl.: A61G 15/16, G02B 27/02

(54) **Integrated instrument assembly for a dental unit**

(30) Priority: 05.07.2002 IT BO20020439
(71) Applicant: CEFLA SOC. COOP. A R.L., I-40026 Imola, Bologna (IT)
(72) Inventor: Nanni, Eros, 40023 Castel Guelfo di Bologna (IT); Virnicchi, Tommaso, 62019 Recanati (IT)
(74) Representative: Cerbaro, Elena, Dr.

(57) **Abstract**

An integrated instrument assembly for a dental unit has a table (2) for supporting at least one dental instrument (3); and a negatoscope (4) for viewing a dental X-ray (5), and which has a screen (10) for supporting the X-ray (5), and a light source (11) for illuminating the screen (10); the light source (11) being defined by at least one LED (12).

## Description

The present invention relates to an integrated instrument assembly for a dental unit.

As is known, dental units comprise an integrated instrument assembly comprising a table for supporting at least one dental instrument, and a negatoscope for viewing dental X-rays.

The negatoscope normally comprises a screen for supporting the X-ray; and a light source for illuminating the screen and normally defined by at least one halogen or incandescent lamp.

Since both halogen and incandescent lamps generate a fairly large amount of heat when operated, known instrument assemblies of the above type must be equipped with heat dissipating devices, which make them fairly complex and expensive.

Another drawback of known instrument assemblies of the above type is the fairly short working life of both halogen and incandescent lamps, which must therefore be changed frequently.

The above drawbacks are partly solved by replacing halogen or incandescent lamps with fluorescent tubes. These, however, require relatively high supply voltages and, therefore, safety devices, which also make known instrument assemblies of the above type relatively complex and expensive.

It is an object of the present invention to provide an integrated instrument assembly for a dental unit, designed to eliminate the aforementioned drawbacks.

According to the present invention, there is provided an integrated instrument assembly for a dental unit; the assembly comprising a table for supporting at least one dental instrument, and a negatoscope for viewing a dental X-ray; and the negatoscope in turn comprising a screen for supporting said X-ray, and a light source for illuminating the screen; characterized in that said light source comprises at least one LED.

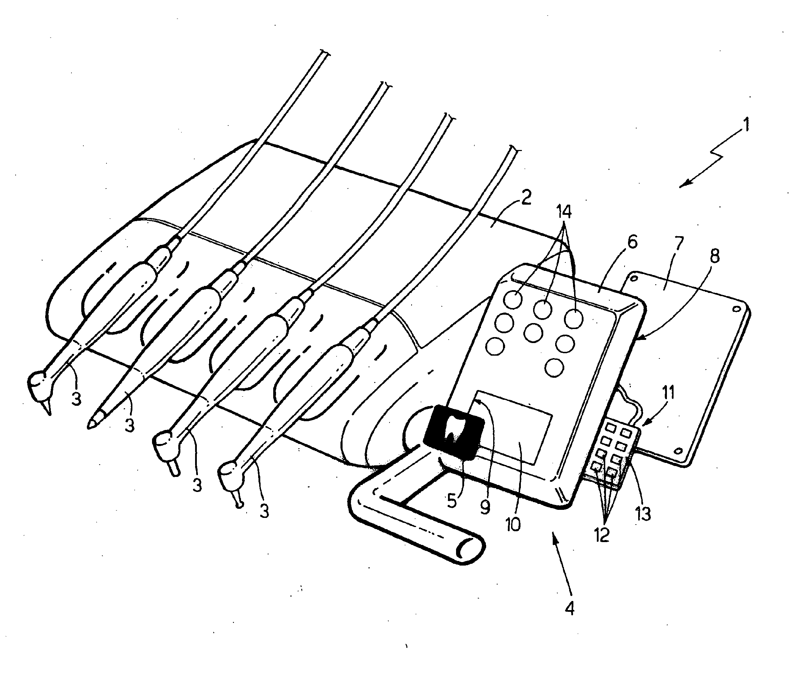

The present invention will be described by way of example with reference to the accompanying drawing, which shows a schematic view in perspective of a non-limiting embodiment.

Number 1 in the accompanying drawing indicates as a whole an integrated instrument assembly for a known dental unit not shown.

Assembly 1 comprises a table 2 for supporting a number of commonly used dental instruments 3, i.e. turbines, micromotors, water/air syringes, etc.; and a negatoscope 4 for viewing a dental X-ray 5.

Negatoscope 4 comprises a box body 6, which is substantially cup-shaped, is fitted to table 2, is closed at the back by a substantially flat plate 7 to define a chamber 8, and has a substantially rectangular front window 9 formed through body 6.

Window 9 is closed by a satin-finish or frosted screen 10, which is made of light-diffusing opal material, supports X-ray 5, and is illuminated, in use, by a light source 11 housed in chamber 8 and comprising a number of LEDs 12 arranged on a known printed circuit 13 fixed to body 6 at screen 10.

Each LED 12 is preferably a white LED comprising a phosphorescent material, and a LED for illuminating the phosphorescent material to emit white light. Alternatively, LEDs 12 are of different colours - in the example shown, three (red, green, and blue) - so as to jointly emit white light. Alternatively, each LED 12 is a so-called organic LED comprising two conducting electrodes, one of which made of transparent material, and an organic material located between the electrodes and for emitting white light when electric current is fed between the electrodes.

In a variation not shown, source 11 is defined by one organic LED 12 defining an emitting surface of given size.

Finally, assembly 1 comprises a number of actuating members 14 fitted to body 6, above screen 10, and for selectively controlling operation of the dental unit (not shown).

Assembly 1 has several advantages, foremost of which are the relatively long working life of LEDs 12, and the relatively small amount of heat generated by them in use.

## Claims

1. An integrated instrument assembly for a dental unit; the assembly comprising a table (2) for supporting at least one dental instrument (3), and a negatoscope (4) for viewing a dental X-ray (5); and the negatoscope (4) in turn comprising a screen (10) for supporting said X-ray (5), and a light source (11) for illuminating the screen (10); **characterized in that** said light source (11) comprises at least one LED (12).

2. An assembly as claimed in Claim 1, wherein the light source (11) comprises a number of LEDs (12).

3. An assembly as claimed in Claim 2, wherein each LED (12) is a white LED comprising a phosphorescent material, and a LED for illuminating the phosphorescent material to emit white light.

4. An assembly as claimed in Claim 2, wherein each LED (12) is a so-called organic LED comprising two conducting electrodes, and an organic material located between the electrodes and emitting white light when electric current is fed between the electrodes.

5. An assembly as claimed in Claim 1 or 2, wherein said light source (11) comprises a number of LEDs (12) of different colours for jointly emitting white light.

6. An assembly as claimed in Claim 1, wherein the light source (11) comprises a single so-called organic LED (12) comprising two conducting electrodes, and an organic material located between the electrodes and emitting white light when electric current is fed between the electrodes; the organic LED (12) defining an emitting surface of given size.

7. An assembly as claimed in any one of the foregoing Claims, wherein the light source (11) also comprises a printed circuit (13); the LEDs (12) being mounted on said printed circuit (13).

8. An assembly as claimed in any one of the foregoing Claims, and also comprising a number of actuating members (14) for selectively controlling operation of said dental unit.

9. A dental unit comprising an integrated instrument assembly as claimed in any one of the foregoing Claims.
